Europäisches Patentamt

European Patent Office

Office européen des brevets

(11) Veröffentlichungsnummer: **0 384 321**
**A2**

(12) # EUROPÄISCHE PATENTANMELDUNG

(21) Anmeldenummer: 90103041.1

(22) Anmeldetag: 16.02.90

(51) Int. Cl.⁵: **A01K  63/04**

(30) Priorität: 24.02.89 DE 3905832

(43) Veröffentlichungstag der Anmeldung:
29.08.90 Patentblatt  90/35

(84) Benannte Vertragsstaaten:
**FR GB IT**

(71) Anmelder: **AB- AQUATECHNIK KARLHEINZ BUSCHKE**
**Blaubergstrasse 10**
**D-8137 Berg 3(DE)**

(72) Erfinder: **Buschke, Karlheinz, c/o**
**ab-aquatechnik**
**Karlheinz Buschke, Blaubergstrasse 10**
**D-8137 Berg 3(DE)**
Erfinder: **Hartig, Heinz**
**Haarer Strasse 12**
**D-8011 Putzbrunn(DE)**

(74) Vertreter: **von Samson-Himmelstjerna,**
**Friedrich R., Dipl.-Phys. et al**
**c/o SAMSON & BÜLOW**
**Patentanwaltskanzlei, Widenmayerstrasse 5**
**D-8000 München 22(DE)**

(54) **Aquarienfilter.**

(57) Die Erfindung betrifft einen Aquarienfilter mit wenigstens einer Schnellfiltereinheit (1) und/oder wenigstens einer biologischen Filtereinheit (30), die in jeweiliger Anpassung an die gewünschten Filterwirkungen in unterschiedlichster Weise miteinander kombiniert werden können

FIG. 1

EP 0 384 321 A2

Die Erfindung betrifft einen Aquarienfilter.

Bei der Filterung von Aquarienwasser ist das zentrale Problem, durch die Art der Filterung das Sauerstoff-Kohlensäure-Gleichgewicht einzustellen, beziehungsweise beizubehalten, welches für die Fische innerhalb des Aquariums lebensnotwendig ist. Bei den dafür geeigneten Filtermaßnahmen sind im wesentlichen zwei Vorgänge voneinander zu unterscheiden:

Mit Hilfe eines sogenannten mechanischen Schnellfilters wird lediglich der im Wasser vorhandene Schmutz abgefangen. Der Filter selbst wirkt dabei wie ein mechanisches Sieb, fängt die im Wasser enthaltenen groben Bestandteile ab und bewirkt, daß die abgelagerten groben Partikel nach einer gewissen Zeit in den kolloidalen Zustand übergehen. Als Resultat dessen bietet sich das den Schnellfilter durchlaufene Wasser als optisch rein dar.

Eine zweite Möglichkeit des Filtrierens von Wasser eines Aquariums besteht darin, die in der Flüssigkeit enthaltenen organischen Substanzen in anorganische Salzform umzuwandeln. Dies wird üblicherweise durch die sogenannten "Biologischen Langsamfilter" bewirkt. Dabei handelt es sich um mechanische Träger wie beispielsweise Sand oder Kies, die eine sehr feine Filterhaut aufweisen. Da das Prinzip der biologischen Filterung darin besteht, die aus Eiweißen bestehenden aquaristischen Verunreinigungen mit Hilfe von Bakterien abzubauen, ist gerade aufgrund der Verwendung dieser Stoffe nur schon bei geringster Änderung von deren chemischen Verhältnissen zueinander eine vollständige Änderung der aquaristischen Verhältnisse innerhalb des Aquariums das Resultat.

Die aquaristische Chemie ist nämlich derart komplex, daß ein Mangel an einer ganz bestimmten Substanz (meist Sauerstoff) nicht dadurch behoben werden kann, daß diese Substanz dem System einfach als reine Substanz unmittelbar zugeführt wird; vielmehr würde eine derartige Zufuhr zu einer wesentlichen Verschlechterung der chemischen Gesamtverhältnisse führen, und es muß daher die erforderliche Substanz über chemische Hilfsreaktionen erhalten werden. Allgemein bekannt in der Aquaristik sind in dieser Hinsicht beispielsweise die Abstimmungsverfahren Denitrifizierung bzw. Nitrifizierung.

Ebenfalls ist es erforderlich, die zu filternde Wassermenge so schnell wie möglich unter Berücksichtigung der aquaristischen Randbedingungen durch einen den jeweiligen Wünschen angepaßten Filter durchlaufen zu lassen.

Der Erfindung liegt die Aufgabe zugrunde, einen Aquarienfilter mit hohem Filterdurchsatz bereitzustellen. Des weiteren soll mit dem Aquarienfilter, falls erforderlich, auf einfache Weise die Einstellung der chemischen Verhältnisse in dem die Fische aufnehmenden Aquariumbecken möglich sein.

Diese Aufgabe wird durch einen Aquarienfilter mit wenigstens einer Schnellfiltereinheit und/oder wenigstens einer biologischen Filtereinheit gelöst.

Dabei kann vorteilhaft eine Schnellfiltereinheit mit einer weiteren Schnellfiltereinheit oder eine biologische Filtereinheit mit einer weiteren biologischen Filtereinheit, wie aber auch eine Schnellfiltereinheit mit einer biologischen Filtereinheit verbunden werden. So kann vorteilhaft ein Aquarienfilter aus einzelnen Filtereinheiten in Abhängigkeit vom zu filternden Wasservolumen zusammengebaut werden. Durch die möglichen Kombinationen der Filtereinheiten ist es zusätzlich möglich, die Geschwindigkeit des Durchsatzes und die spezifische Reinheit des Wassers sowie die im Aquarium herrschenden chemischen Verhältnisse eindeutig festzulegen.

Bei einer bevorzugten Ausführungsform des Aquarienfilters sind mehrere Filtereinheiten gleichzeitig miteinander verbunden. Dies hat den Vorteil, daß bei unterschiedlichen Funktionen der Filtereinheiten ein gewisser Wasseranteil lediglich von den großen Fremdpartikeln gereinigt, jedoch ein anderer Anteil des Wassers je nach Bedarf bakteriell gefiltert wird.

Vorteilhaft sind die Filtereinheiten baulich aneinander angepaßt; so können sie jederzeit schnell und mühelos ein- und ausgebaut sowie den baulichen Gegebenheiten des Aquariums Rechnung tragen und platzsparend flach ausgebildet sein.

Bei einer bevorzugten Ausführungsform des Aquarienfilters sind die Filtereinheiten im wesentlichen rechteckig. Bei einer weiteren vorteilhaften Ausgestaltung weisen die Filtereinheiten gleiche Tiefe auf, und bei einer anderen Ausgestaltung gleiche Breite. Diese Bauform liefert vorteilhaft die beste und stabilste Verbindung mit den üblicherweise im Handel erhältlichen planen Wänden des Aquariums. Dementsprechend nehmen die zuvor erwähnten vorteilhaften Bauformen für die Filtereinheiten den geringstmöglichen Platz ein und können mit jeweils einer gesamten Wandfläche an der jeweiligen Aquariumwand befestigt, haften.

Bei einer vorteilhaften Ausgestaltung des erfindungsgemäßen Aquarienfilters weisen die Filtereinheiten baulich einander entsprechende Öffnungen auf, die je nach Bedarf geöffnet oder geschlossen sind. So können vorteilhaft die Filtereinheiten trotz schon erfolgten Einbaus innerhalb des Aquariums beliebig mit Wasser versorgt werden.

Diese Öffnungen der Filtereinheiten werden dabei vorteilhaft durch gemeinsame Verbindungsteile miteinander verbunden. So kann eine Dichtung erzielt werden, die gewährleistet, daß lediglich das momentan im Filter bearbeitete Wasser innerhalb des Aquarienfilters weiter verarbeitet wird. Von außen eindringende, die chemischen Verhältnisse innerhalb des Aquarienfilters ändernde Substanzen werden auf diese Weise weitgehend vermieden. Zum Zwecke des Wassertransports sind die Verbindungsteile hohl.

Bei einer weiteren vorteilhaften Ausgestaltung ist wenigstens eine Schnellfiltereinheit mit einer Pumpe verbunden. Diese Pumpe dient vorteilhaft dazu, die sich am Boden des Schnellfilters anstauende Wassermenge abzusaugen und dem Aquarieninnenraum wieder zuzuführen. Sie bewirkt gleichfalls in bekannter Weise den Durchfluß des zu filternden Wassers durch die Filtereinheiten. Selbstverständlich ist ein zusätzlicher Anschluß der Pumpe an eine biologische Filtereinheit ebenfalls möglich, wobei dann am oberen Abschnitt der Filtereinheit abgepumpt wird, da sich dort bei den sogenannten "submersen Filtern" das Wasser anstaut.

Bei einer bevorzugten Ausführungsform ist eine Pumpenaufnahmeeinheit an einer Schnellfiltereinheit angeordnet, welche Öffnungen, die denen der wenigstens einen Schnellfiltereinheit entsprechen, sowie eine Öffnung zur Aufnahme einer Pumpe aufweist. Dadurch ist vorteilhaft die Schnellfiltereinheit baulich von der Pumpe getrennt, und eine bessere bauliche Anordnung der Filtereinheiten übereinander möglich. Gleichzeitig kann die Pumpenaufnahmeeinheit ein Volumen ausbilden, dem sowohl aus einer Schnellfiltereinheit wie aber auch aus der biololgischen Filtereinheit abzusaugende Flüssigkeit zugeführt wird. Auch muß keine Schnellfiltereinheit selbst baulich abgeändert werden, um die Pumpe aufnehmen zu können; die Filtereinheiten sind daher baulich identisch, was eine Vereinfachung bei deren Produktion zur Folge hat.

Die Verbindung mit der biologischen Filtereinheit erfolgt vorteilhaft über weitere Öffnungen der Pumpenaufnahmeeinheit.

Bei einer weiteren vorteilhaften Ausführungsform des Aquarienfilters weisen die Öffnungen, die denen der wenigstens einen Schnellfiltereinheit entsprechen, eine regelbare Einrichtung, beispielsweise einen Schieber auf, welcher deren Querschnitt verändert. Damit kann vorteilhaft die Ansaugwirkung der Pumpe und damit der Volumenstrom in den jeweiligen Filtereinheiten gesteuert werden. Da beispielsweise die Aktivität in einer biologischen Filtereinheit vom Durchsatz an Wasser abhängt, kann eine Veränderung des Öffnungsquerschnittes und demzufolge eine Änderung des jeweiligen Volumenstromes eine spontane und weitreichende Änderung der chemischen Verhältnisse des Aquarieninhaltes zur Folge haben.

Bei einer anderen vorteilhaften Ausgestaltung des Aquarienfilters ist im Schnellfilter eine zwei Kammerabschnitte bildende vertikale Trennwand angeordnet. Zusätzlich ist es dabei von Vorteil, daß wenigstens ein Teil wenigstens einer Wand des Schnellfilters als Einlauf oberhalb des ersten Kammerabschnittes ausgebildet und die obere Kante der vertikalen Trennwand unterhalb der unteren Kante des Einlaufes liegt. Der Einlauf ist dabei vorteilhaft rechenförmig ausgebildet und der zweite Kammerabschnitt des Schnellfilters nach unten offen. Dies hat den Vorteil, daß die effektive Filtereinheit innerhalb des Schnellfilters sowohl von der Aquarienoberfläche wie aber auch von dem Aquariuminneren mit zu filterndem Wasser versorgt wird. Allergröbste Partikel von der Oberfläche des Wassers werden mit Hilfe des rechenförmigen Einlaufes schon vor Eintreten in den Schnellfilter abgesondert. Durch die Anordnung des Einlaufes oberhalb des ersten Kammerabschnittes ist eine direkte Versorgung des Schnellfilters durch Oberfläochenwasser des Aquariums gewährleistet.

Bei einer weiteren bevorzugten Ausführungsform des Aquarienfilters weist der erste Kammerabschnitt nach unten einen mit Öffnung versehenen Boden auf. Durch diesen kann gefiltertes Wasser aus dem ersten Kammerabschnitt an weitere Filtereinheiten weitergegeben werden. Vorteilhaft sind Öffnungen in der Trennwand mit Öffnungen der nicht den ersten Kammerabschnitt bildenden wenigstens einen Wand des Schnellfilters über ein gegenüber dem zweiten Kammerabschnitt nicht geöffnetes Verbindungsteil verbunden. So kann zusätzlich Wasser dem Boden des ersten Kammerabschnittes zugeführt werden, das nicht aus dem zweiten Kammerabschnitt stammt, sondern aus einer weiteren Filtereinheit und bei dieser wiederum möglicherweise aus deren erstem Kammerabschnitt. Das heißt, daß es sich dabei wiederum um Oberflächenwasser handelt.

Bei einer anderen bevorzugten Ausgestaltung sind Auflagen an der Innenseite der den ersten Kammerabschnitt bildenden vertikalen Wände des Schnellfilters angeordnet, die horizontal mit der oberen Kante der vertikalen Trennwand fluchten. Dabei wird bevorzugt ein beweglicher Einsatz in dem ersten Kammerabschnitt angeordnet, der horizontale Randabschnitte aufweist, die auf diesen Auflagen aufliegen. Durch eine derartig abschließende Auflage der Randabschnitte auf den Auflagen der vertikalen Wände, sowie der oberen Kante der vertikalen Trennwand, muß jegliches Wasser, das von oben durch den ersten Kammerabschnitt der Schnellfiltereinheit gelangen will, in jedem Fall durch den Einsatz fließen. Der Einsatz kann auf einfache Weise nach oben herausgehoben werden, wobei dann vorteilhaft sich am Boden des Einsatzes sammelnde grobe Partikel außerhalb des Aquariums aus dem Einsatz des Aquariums herausgeschüttet werden können, und nicht die Gefahr besteht, daß beim Einsatzwechsel diese groben Partikel wieder ins Becken fallen und von neuem separiert werden müssen. Der Einsatz wirkt daher schon alleine durch seine freie Bewegbarkeit als eine Art Großpartikelausleser. Zur Anpassung an den durch die Auflagen wie auch die obere Kante der vertikalen Trennwand gebildeten Rahmen, sowie den durch den ersten Kammerabschnitt gebildeten Raum, weist der Einsatz vorteilhaft eine dem ersten Kammerabschnitt entsprechende, im wesentlichen rechteckige Form auf. Die Führung des Einsatzes beim Einbeziehungsweise Ausführen aus dem ersten Kammerabschnitt erfolgt so gängig und einfach mit Hilfe des zuvor erwähnten Rahmens. Ebenso kann aber auch eine Wand des gesamten Filters wegklappbar sein, wobei dann der Einsatz nicht mehr nach oben herausgehoben, sondern nur auf den noch verbleibenden drei Auflagen herausgeschoben werden muß.

Selbstverständlich kann der Einsatz in seiner Filtrierwirkung auf herkömmliche Weise ausgestaltet sein, das heißt, er weist bei gleicher baulicher Ausgestaltung wie oben erwähnt einen Lochboden auf, der zur Auflage beispielsweise üblicher Filterkohle geeignet ist.

Bei einer weiteren bevorzugten Ausführungsform weist der Einsatz des Aquarienfilters wenigstens eine im wesentlichen vertikal angeordnete Filterdrainage auf, die mit dem Boden des Einsatzes verbunden ist. Eine derartige vertikale Anordnung bewirkt die unmittelbarste Fortbewegung des Fließmediums, wobei Öffnungen im Boden des Einsatzes durch die Filterdrainage gebildet sind, durch die das Wasser aus dem Boden des Einsatzes in den unteren Bereich des ersten Kammerabschnittes einströmen kann.

Bei einer bevorzugten Ausführungsform des Aquarienfilters weist die Oberfläche der Filterdrainage in Fließrichtung eines zu filternden Mediums Zwischenräume bzw. Kanäle auf, die so gewählt sind, daß ein die Filterdrainage umschließendes Filtermaterial nicht an der gesamten Oberfläche der Filterdrainage anliegt. Wie zuvor erläutert, bleiben grobe Partikel an dem die Filterdrainage umschließenden Filtermaterial hängen. Das das Filtermaterial durchströmende und von diesen Partikeln gesäuberte Wasser soll nun so schnell wie möglich weiterbefördert werden. Dies ist jedoch nur dann möglich, wenn ein Freiraum zur Verfügung steht, wie im vorliegenden Fall der Zwischenraum zwischen Filterdrainageoberflächen und Rückseite des Filtermaterials, innerhalb dessen das Wasser ohne Einschränkung strömen kann.

Bei einer anderen bevorzugten Ausführungsform des erfindungsgemäßen Aquarienfilters ist der Gesamtquerschnitt des durch die Oberfläche der Filterdrainage sowie der Innenfläche des Filtermaterials gebildeten Zwischenraums mindestens gleich groß wie die durch die Öffnungen der Pumpenaufnahmeeinheit bestimmte Durchflußfläche. Dies gewährleistet zu jeder Zeit einen freien Ablauf des zu filternden Wassers. Besonders bevorzugt weist die Filterdrainage im Querschnitt die Form einer Welle auf, beziehungsweise im Querschnitt die Form meanderförmig regelmäßig zueinander versetzt angeordneter Rechtecke. Wird beispielsweise durch ein im Wasser enthaltenes Partikel nur ein Zwischenraumabschnitt zwischen Filterdrainage und Filtermaterial verstopft, so bleiben immer noch genügend andere Zwischenräume der Filterdrainage übrig, um das Filterwasser abzuleiten. Insbesondere die Wellenform der Filterdrainage hat den Vorteil großer Eigenstabilität, wobei sich das Filtermaterial gerade bei dieser Form nicht an die Gesamtheit der Oberfläche der Filterdrainage anschmiegen kann.

Besonders vorteilhaft sind die Filterdrainagen aus Kunststoff.

Ausführungsbeispiele der Erfindung sind in den Zeichnungen dargestellt und werden im folgenden näher beschrieben.

Es zeigen:

Fig. 1 eine perspektivische Ansicht einer Schnellfiltereinheit;

Fig. 2 eine Filterdrainage in Wellenform mit ummantelndem Filtermaterial im Querschnitt;

Fig. 3 einen Aquarienfilter als Kombination aus Schnellfiltereinheit und biologischer Filtereinheit in perspektivischer Ansicht; und

Fig. 4 einen Aquarienfilter mit zwei Schnellfilter-und zwei biologischen Filtereinheiten in perspektivischer Ansicht.

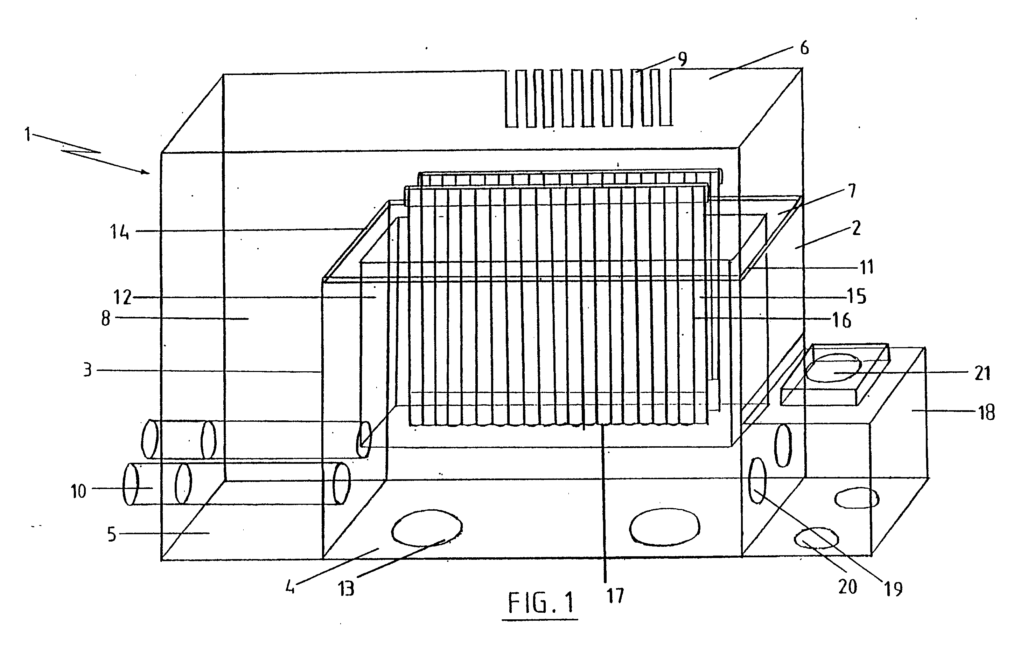

In Fig. 1 ist eine Schnellfiltereinheit 1 gezeigt, die im wesentlichen aus einem rechteckförmigen Behälter besteht. Eine vertikal und parallel zu den kürzeren. vertikalen Seitenwänden 2 des Behälters angeordnete Trennwand 3, die mit ihren Seitenkanten an einem Boden 4 des Schnellfilters wie auch gleichzeitig an einer Vorderwand 5 und an einer Rückwand 6 der Schnellfiltereinheit 1 anliegt, bildet zwei Kammerabschnitte 7, 8 aus.

In einem Abschnitt im oberen Bereich der Rückwand 6, oberhalb des ersten Kammerabschnittes 7 ist ein Einlauf 9 vorgesehen, der rechenartig ausgebildet ist und dazu dient, im aus dem Aquararim einlaufenden Wasser enthaltene grobe Verunreinigungen am Eintritt in die Schnellfiltereinheit 1 gleichzeitig mit dem Wasser zu hindern. Zusätzlich gelangt jedoch auch Wasser durch den nach unten geöffneten Boden 4 des zweiten Kammerabschnittes 8 in das Innere der Schnellfiltereinheit 1.

Durch einander entsprechende Öffnungen in der Wand 2 der Schnellfiltereinheit 1 wie auch der Trennwand 3, sowie durch den zweiten Kammerabschnitt 8 hindurch erstrecken sich zwei Verbindungsrohre 10, die dazu dienen, dem ersten Kammerabschnitt 7 eine Flüssigkeit zuführen zu können, ohne daß aus dem zweiten Kammerabschnitt 8 Flüssigkeit hinzukommt.

An den Innenseiten der den ersten Kammerabschnitt 7 bildenden vertikalen Wände 2, 5 und 6, sind Auflageleisten 11, beispielsweise mittels Kleben befestigt, die horizontal mit der oberen Kante der vertikalen Trennwand 3 fluchten. Sie bilden auf diese Weise zusammen mit der oberen Kante der Trennwand 3 eine Art Auflagerahmen aus.

Ein Einsatz 12, der eine zur Aufnahme in den ersten Kammerabschnitt 7 entsprechend abmessungsmäßig geringere rechteckige Form aufweist, kann in dem ersten Kammerabschnitt 7 aufgenommen sein. Um zu gewährleisten, daß das zu filternde Wasser in jedem Fall durch den Einsatz 12 gelangen muß, um aus Öffnungen 13 im Boden 4 nach der Schnellfilterung austreten zu können, weisen die oberen Kanten des Einsatzes 12 horizontale Randabschnitte 14 auf, mit deren Hilfe der Einsatz 12 auf den Auflageleisten 11 im wesentlichen dichtend aufliegen kann.

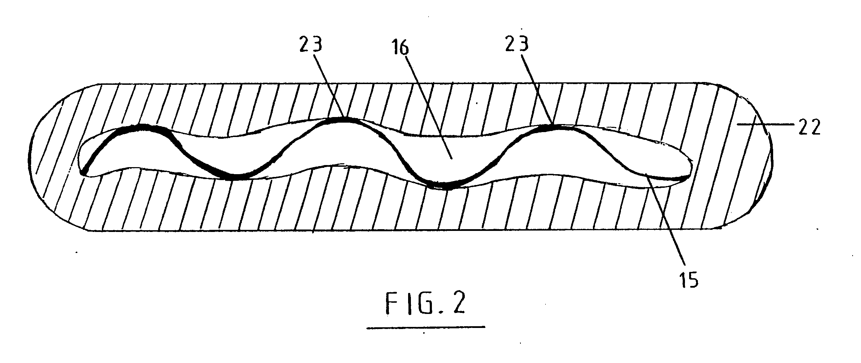

In der Mitte und längs des Einsatzes 12 erstrecken sich zwei aus Kunststoff gefertigte Filterdrainagen 15, um die ein zu verwendendes Filtermaterial 22 gewickelt wird. Im folgenden wird unter Bezugnahme auf Fig. 2 die spezielle Wirkungsweise dieser Filterdrainagen 15 beschrieben.

Die Filterdrainagen 15 bilden Kanäle 16 aus, die in vertikaler Fließrichtung dazu dienen, das zu filternde Wasser in Richtung des Bodens 4 im ersten Kammerabschnitt 7 weiterzubefördern. Dabei sind die Filterdrainagen 15 mit dem Boden des Einsatzes 12 fest verbunden und bilden mit diesem in den Anschußstellen Öffnungen 17 zum Wasserdurchlaß aus.

Seitlich an der Wand 2 angeordnet ist eine rechteckige Pumpenaufnahmeeinheit 18, die zur Wand 2 hin mit Öffnungen 19, zu ihrem Boden hin mit Öffnungen 20, und nach oben mit einer verstärkten Aufnahmeöffnung 21 zur Aufnahme einer nicht näher dargestellten Pumpe versehen ist.

Wie in der Fig. 1 gezeigt, ist die Pumpenaufnahmeeinheit aus Platzersparnisgründen im wesentlichen den Abmessungen der Wand 2 der Schnellfiltereinheit 1 angepaßt. Je nachdem, welche Öffnungen 19 bzw. 20 geöffnet sind, wird aus diesen der Pumpenaufnahmeeinheit 18 das behandelte Wasser zugeführt und über die nicht dargestellte Pumpe dem Aquariuminneren wieder zugeleitet.

Die Fig. 2 zeigt einen Querschnitt durch die Filterdrainage 15 der Fig. 1, die jedoch im Beispiel der Fig. 2 schon mit dem Filtermaterial 22 umgeben ist. Die Filterdrainage 15 hat dabei Wellenform, wobei sich das Filtermaterial 22, beispielsweise in üblicher Form von Matten, tangential an Wellentäler und Wellenhügel 23 der wellenförmigen Filterdrainage 15 anschmiegt. Das Filtermaterial 22 schmiegt sich jedoch nicht über die gesamte Oberfläche der Filterdrainage an, sondern bildet Zwischenräume in Form von Kanälen 16 dort relativ in einem Tal der Filterdrainage 15 aus, wo es davor und danach an den Wellenhügeln 23 auflag. Die mögliche Volumenströmung in vertikaler Richtung ergibt sich sodann aus der aufsummierten Fläche, welche durch die QOuerschnitte dieser Kanäle 16 erhalten wird. Da es sich bei einer derartigen Welle um eine preiswert herstellbare Produktform großer Eigenstabilität handelt, ist nur unter seltensten Umständen mit Beschädigungen der Filterdrainage 15 zu rechnen.

Die zuvor erwähnte, von den Kanälen 16 gebildete aufsummierte Fläche der Filterdrainagen 15 innerhalb des Einsatzes 12 ist mindestens so groß wie die Fläche, welche durch die Öffnungen 19 hin zur Pumpenaufnahmeeinheit 18 gebildet wird, um auf diese Weise ein sehr hohe Pumpenleistung erzielen zu können.

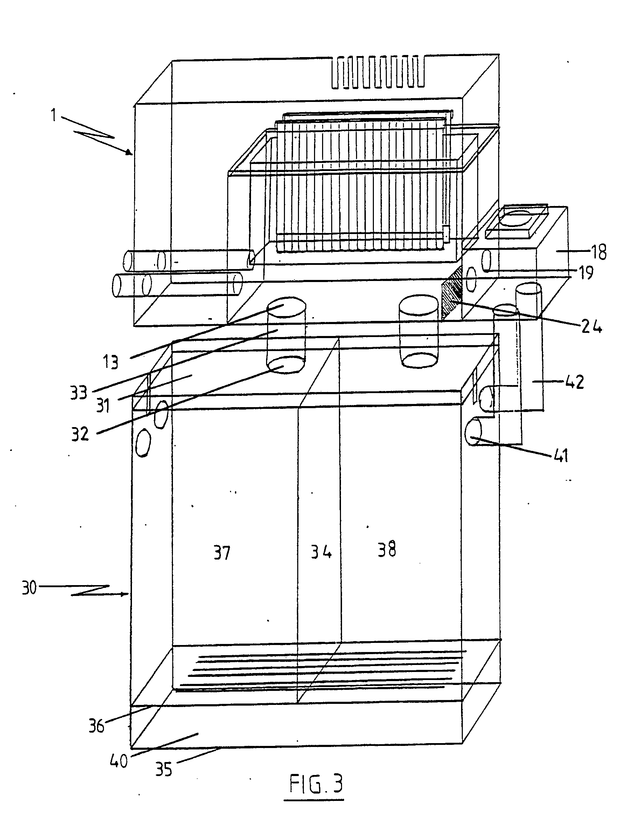

In Fig. 3 ist eine Kombination aus einer Schnellfiltereinheit 1 sowie einer biologischen Filtereinheit 30 dargestellt. Wie schon zuvor erwähnt, hat die biologische Filtereinheit 30 eine von der Funktion einer Schnellfiltereinheit 1 gänzlich unterschiedliche Funktion. Die biologische Filtereinheit 30 entspricht baulich, bis auf die Höhe, den Abmessungen der über ihr angeordneten entsprechenden Schnellfiltereinheit 1. Durch einen Deckel 31 ist die biologische Filtereinheit nach oben abgeschlossen und weist in diesem Deckel 31 zwei Öffnungen 32 auf, welche den Öffnungen 13 im Boden 4 der Schnellfiltereinheit 1 entsprechen. Die biologische Filtereinheit 30 ist mittels rohrförmiger Verbindungsteile 33 mit der Schnellfiltereinheit 1 inhaltsmäßig verbunden. Eine vertikale Trennwand 34, die parallel zu den kleinflächigeren Seitenwänden der biologischen Filtereinheit 30 verläuft, sowie ein zu einem Boden 35 der biologischen Filtereinheit 30 gleichflächiger und parallel verlaufender Boden 36, der an die Unterkante der Trennwand 34 anschließt, bildet zusammen mit dieser, sowie den Innenwänden der biologischen Filtereinheit 30 zwei jeweils gleichgroße Kammerabschnitte 37, 38. Der Boden 36 ist nach unten hin über Schlitze 39 offen, und bildet zusammen mit dem Boden 35 und den unteren Abschnitten der Seitenwände der biologischen Filtereinheit 30 einen Raum 40 aus, der gleichzeitig über die Schlitze 39 mit beiden Kammerabschnitten 37, 38 verbunden ist. Im oberen Bereich der Seitenwand 38 sind Öffnungen 41 vorgesehen, über die mit Hilfe von Verbindungsteilen 42 angepaßten Durchmessers eine Verbindung des zweiten Kammerabschnitts 38 mit der Pumpenaufnahmeeinheit 18 ermöglicht wird. Zum Anschluß an andere Filtereinheiten ist ebenfalls im oberen Bereich der nach außen liegenden Wand des ersten Kammerabschnitts 37 der biologischen Filtereinheit 30 wenigstens eine Öffnung vorgesehen.

Die Funktion der aus Schnellfiltereinheit 1 sowie biologischer Filtereinheit 30 bestehenden Kombination ist nun wie folgt:

Den ersten Kammerabschnitt 7 der Schnellfiltereinheit 1 durchsetzende Flüssigkeit wird teilweise über das rohrförmige Verbindungsteil 33 dem ersten Kammerabschnitt 37 der biologischen Filtereinheit 30 zugeführt, wobei der biologische Filter 30 beispielsweise mit Bims- oder Schlackengranulat feinstrukturierter Oberfläche mit Bakterien bekannter Struktur und Konsistenz, aufgefüllt ist. Nach Durchlaufen des ersten Kammerabschnittes 37 in der biologischen Filtereinheit 30 fließt das Wasser durch die Schlitze 39 in den Raum 40 und von dort aus weiter in den zweiten Kammerabschnitt 38. Die Öffnung 32 im Deckel 31 oberhalb des zweiten Kammerabschnitts 38 ist zur Schnellfiltereinheit 1 hin verschlossen, wodurch das gefilterte Wasser lediglich aus den Öffnungen 41 über das Verbindungsteil 42 durch die nicht dargestellte Pumpe in der Pumpenaufnahmeeinheit 18 angesaugt wird.

Gleichzeitig aber saugt die Pumpe Wasser direkt aus der Schnellfiltereinheit 1 über die Öffnungen 19 ab. Daher ist bei den Öffnungen 19 ein Schieber 24 angeordnet, mit dessen Hilfe der Querschnitt, und damit auch die Durchflußrate bei gleicher Förderleistung der Pumpe verändert werden kann. Auf diese Weise ist es möglich, stets den gewünschten Durchfluß in der jeweiligen Schnellfilter-(1) bzw. biologischen Filtereinheit (30) zu kontrollieren. Dies ist insbesondere für die Steuerung der aeroben und anaeroben Verhältnisse in der biologischen Filtereinheit 30, wichtig.

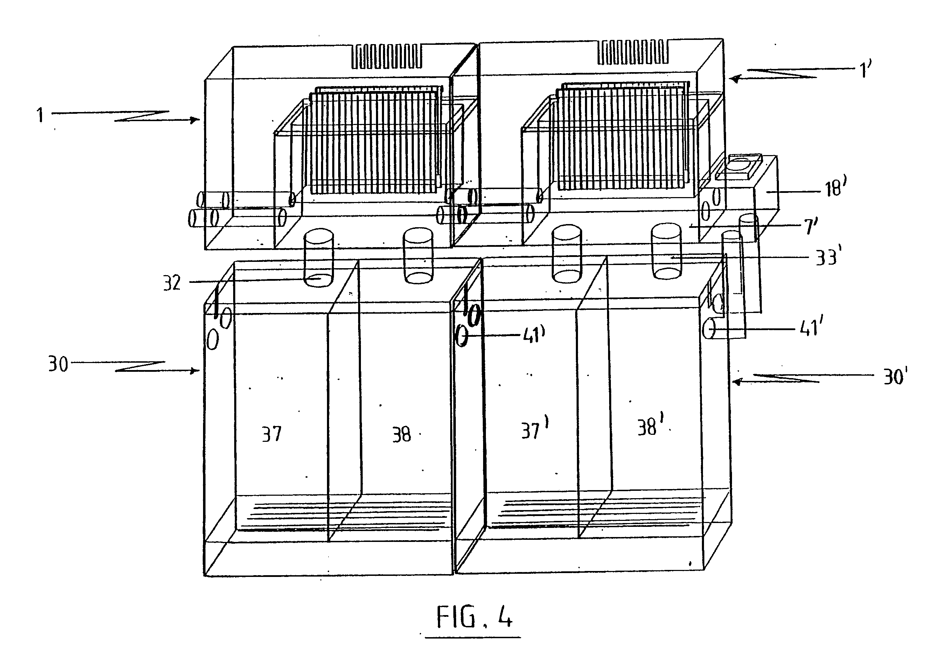

Eine weitere Möglichkeit des Wasserfiltrierens wird in Fig. 4 näher dargestellt. Dabei sind die einzelnen Merkmale der Filtereinheiten schon zuvor erläutert worden und es erübrigt sich daher deren Beschreibung, und es wird nur noch der vom Wasser beschriebene Weg durch die Filtereinheiten nachvollzogen. Das Wasser aus der Schnellfiltereinheit 1 gelangt dabei in üblicher Weise über die Öffnung 32 in der biologischen Filtereinheit 30 in den ersten Kammerabschnitt 37 und von dort aus, wie in Fig. 3 beschrieben, zum zweiten Kammerabschnitt 38. Über die Öffnungen 41' gelangt das Wasser weiter in einen ersten Kammerabschnitt 37' einer zweiten Filtereinheit 30' und von dort in bekannter Weise in den zweiten Kammerabschnitt 38'. Von dort aus kann nun das Wasser sowohl in den ersten Kammerabschnitt 7' einer über der zweiten biologischen Filtereinheit 30' angeordneten Schnellfiltereinheit 1' durch ein Verbindungsteil 33' gelangen; gleichzeitig jedoch wird über die Öffnung 41' ein Teil der Flüssigkeit in ein Pumpenaufnahmeteil 18' mit Hilfe einer nicht dargestellten Pumpe angesaugt.

Das Ausführungsbeispiel der Fig. 4 soll nur verdeutlichen, daß und wie mögliche Kombinationen von Schnellfiltereinheit und biologischer Filtereinheit entsprechend den gewünschten Filterzwekken und Systemgrößen möglich sind.

## Ansprüche

1. Aquarienfilter mit wenigstens einer Schnellfitereinheit (1) und/oder wenigstens einer biologischen Filtereinheit (30),
**dadurch gekennzeichnet,**
daß mehrere Filtereinheiten ( 1, 1', 30, 30' ) gleichzeitig und beliebig miteinander kombinierbar und bezüglich des Durchflusses einzeln steuerbar sind.

2. Aquarienfilter nach Anspruch 1, dadurch gekennzeichnet, daß die Filtereinheiten (1, 1', 30, 30') baulich aneinander angepaßt sind.

3. Aquarienfilter nach Anspruch 2, dadurch gekennzeichnet, daß die Filtereinheiten (1, 1', 30, 30') im wesentlichen rechteckig sind.

4. Aquarienfilter nach Anspruch 2 oder 3, dadurch gekennzeichnet, daß die Filtereinheiten (1, 1', 30, 30') gleiche Tiefe aufweisen.

5. Aquarienfilter nach Anspruch 3 oder 4, dadurch gekennzeichnet, daß die Filtereinheiten (1, 1', 30, 30') gleiche Breite aufweisen.

6. Aquarienfilter nach wenigstens einem der Ansprüche 3 bis 5, dadurch gekennzeichnet, daß die Filtereinheiten (1, 1', 30, 30') baulich einander entsprechende Öffnungen (13, 19, 32, 41) aufweisen, die je nach Bedarf geöffnet oder geschlossen sind.

7. Aquarienfilter nach Anspruch 6 dadurch gekennzeichnet, daß die Öffnungen (13, 19, 32, 41) der Filtereinheiten (1, 1', 30, 30') durch gemeinsame Verbindungsteile (10, 33) miteinander verbunden sind.

8. Aquarienfilter nach Anspruch 7, dadurch gekennzeichnet, daß die Verbindungsteile (10, 33) hohl sind und die Filtereinheiten (1, 1', 30, 30') inhaltsmäßig miteinander verbinden.

9. Aquarienfilter nach wenigstens einem der vorstehenden Ansprüche, dadurch gekennzeichnet, daß wenigstens eine Schnellfiltereinheit (1, 1') mit einer Pumpe verbunden ist.

10. Aquarienfilter nach Anspruch 9, dadurch gekennzeichnet, daß eine Pumpenaufnahmeeinheit (18, 18') an wenigstens einer Schnellfiltereinheit (1, 1') angeordnet wird, welche Öffnungen (19), die denen der wenigstens einen Schnellfiltereinheit (1, 1') entsprechen, sowie eine Öffnung (21) zur Aufnahme einer Pumpe, aufweist.

11. Aquarienfilter nach Anspruch 10, dadurch gekennzeichnet, daß die Öffnungen, die denen der wenigstens einen Schnellfiltereinheit (1, 1') entsprechen, eine Einrichtung (24) zur Veränderung des Querschnitts aufweisen.

12. Aquarienfilter nach Anspruch 10, dadurch gekennzeichnet, daß die Pumpenaufnahmeeinheit (18, 18') weitere Öffnungen (20), die denen in der biologischen Filtereinheit (30, 30') entsprechen, zur Verbindung mit der biologischen Filtereinheit (30, 30'), aufweist.

13. Aquarienfilter nach wenigstens einem der vorstehenden Ansprüche, dadurch gekennzeichnet, daß im Schnellfilter (1) eine wenigstens zwei Kammerabschnitte (7. 8) bildende, wenigstens eine vertikale Trennwand (3) angeordnet ist.

14. Aquarienfilter nach Anspruch 13, dadurch gekennzeichnet, daß wenigstens ein Teil wenigstens einer Wand (6) des Schnellfilters (1) als Einlauf (9) oberhalb des ersten Kammerabschnittes (7) ausgebildet und die obere Kante der vertikalen Trennwand (3) unterhalb der unteren Kante des Einlaufes (9) liegt.

15. Aquarienfilter nach Anspruch 14, dadurch gekennzeichnet, daß der Einlauf (9) rechenförmig ausgebildet ist.

16. Aquarienfilter nach wenigstens einem der Ansprüche 13 bis 15, dadurch gekennzeichnet, daß der zweite Kammerabschnitt (8) des Schnellfilters (1) nach unten offen ist.

17. Aquarienfilter nach wenigstens einem der Ansprüche 13 bis 16, dadurch gekennzeichnet, daß der erste Kammerabschnitt (7) einen mit Öffnungen (13) nach unten versehenen Boden (4) aufweist.

18. Aquarienfilter nach wenigstens einem der Ansprüche 13 bis 17, dadurch gekennzeichnet, daß Öffnungen in der Trennwand (3) mit Öffnungen der nicht den ersten Kammerabschnitt (7) bildenden wenigstens einen Wand (2) des Schnellfilters (1) über ein gegenüber dem zweiten Kammerabschnitt nicht geöffnetes Verbindungsteil (10) verbunden sind.

19. Aquarienfilter nach wenigstens einem der Ansprüche 13 bis 18, dadurch gekennzeichnet, daß Auflagen (11) an der Innenseite der den ersten Kammerabschnitt (7) bildenden vertikalen Wände (2, 5, 6) des Schnellfilters (1) angeordnet sind, die horizontal mit der oberen Kante der vertikalen Trennwand (3) fluchten.

20. Einsatz (12) für einen Schnellfilter mit einer im wesentlichen vertikal angeordneten Filterdrainage (15) zum Auslaß des schnellgefilterten Mediums, dadurch gekennzeichnet, daß der Einsatz (12) becherförmig ausgebildet beweglich in dem ersten Kammerabschnitt (7) angeordnet ist und horizontale Randabschnitte (14) aufweist, die auf den Auflagen (11) aufliegen.

21. Einsatz (12) nach Anspruch 20, gekennzeichnet durch eine dem ersten Kammerabschnitt (7) entspechende, im wesentlichen rechteckige Form.

22. Einsatz (12) nach Anspruch 20 oder 21, dadurch gekennzeichnet, daß die Filterdrainage mit dem Boden des Einsatzes (12) verbunden ist.

23. Einsatz (12) nach Anspruch 22, gekennzeichnet durch Öffnungen (17) im Boden des Einsatzes (12), die durch die Filterdrainage (15) gebildet sind.

24. Einsatz (12) nach wenigstens einem der Ansprüche 20 - 23, dadurch kennzeichnet, daß die Oberfläche der Filterdrainage (15) in Fließrichtung eines zu filternden Mediums Zwischenräume (16) aufweist, die so gewählt sind, daß ein die Filterdrainage (15) umschließendes Filtermaterial (22) nicht an der gesamten Oberfläche der Filterdrainage (15) anliegt.

25. Einsatz (12) nach Anspruch 28, dadurch gekennzeichnet, daß der Gesamtquerschnitt des durch die Oberfläche der Filterdrainage (15 ) sowie der Innenfläche des Filtermaterials (22) gebildeten Zwischenraumes (16) mindestens gleichgroß ist wie die durch die Öffnungen der Pumpenaufnahmeeinheit (18, 18') bestimmte Durchflußfläche.

26. Einsatz 12 nach Anspruch 25, dadurch gekennzeichnet, daß die Filterdrainage (15) im Querschnitt die Form einer Welle aufweist.

27. Einsatz nach Anspruch 25, dadurch gekennzeichnet, daß die Filterdrainage (15) im Querschnitt die Form meanderförmig, regelmäßig zueinander versetzt angeordneter Rechtecke aufweist.

28. Einsatz (12) nach wenigstens einem der Ansprüche 20 bis 27, dadurch gekennzeichnet, daß die Filterdrainage (15) aus Kunststoff ist.

FIG.1

EP 0 384 321 A2

FIG.2

EP 0 384 321 A2

1

18

19

24

13

33

31

32

42

41

30

37    34    38

36

40    35

FIG. 3

FIG. 4

EP 0 384 321 A2